# EUROPEAN PATENT APPLICATION

(11) **EP 4 574 546 A1**
(43) Date of publication of application: **25.06.2025**
(21) Application number: 24220841.1
(22) Date of filing: 18.12.2024
(51) Int. Cl.: B60L 53/36, B60L 53/80, B60W 30/06, B62D 15/02, B60W 30/18

(54) **BATTERY SWAP PARKING CONTROL METHOD, MEDIUM, APPARATUS, AND VEHICLE**

(30) Priority: 22.12.2023 CN 202311787308
(71) Applicant: Nio Technology (Anhui) Co., Ltd, Hefei City, Anhui 230601 (CN)
(72) Inventor: SHU, Nanxiang, Shanghai (CN); MA, Pingchuan, Shanghai (CN); WU, Di, Shanghai (CN); MA, Jian, Shanghai (CN); LI, Xin, Shanghai (CN); YIN, Biru, Shanghai (CN); ZHANG, Dong, Shanghai (CN)
(74) Representative: Vossius & Partner Patentanwälte Rechtsanwälte mbB

(57) **Abstract**

The disclosure relates to the technical field of battery swapping, and in particular to a battery swap parking control method, a medium, an apparatus, and a vehicle. The disclosure aims to solve the problem in manual battery swap parking that a vehicle speed cannot be well controlled, leading to a collision with an infrastructure of a battery charging and swap station. To this end, the battery swap parking control method of the disclosure includes: obtaining a current position and a current speed of a vehicle when the vehicle is in a reverse gear; determining a parking speed limit threshold based on the current position; comparing the current speed with the parking speed limit threshold; and controlling a driving torque of the vehicle based on a comparison result. According to the control method of the disclosure, the current position of the vehicle in a parking process is obtained, and the driving torque of the vehicle is controlled based on the comparison between the parking speed limit threshold corresponding to the current position, and the current speed. In this way, a parking speed of the vehicle can be controlled in the parking process, thereby avoiding damage to the infrastructure of the battery charging and swap station due to an excessively fast speed, and improving the safety of a manual battery swap parking process.

## Description

The present application claims priority of CN patent application 202311787308.0 filed on December 22, 2023 with the title "Battery swap parking control method, medium, apparatus, and vehicle", the entire of which is incorporated herein by reference.

### Technical Field

The disclosure relates to the technical field of battery swapping, and in particular to a battery swap parking control method, a medium, an apparatus, and a vehicle.

### Background Art

With the rapid growth of sales of new energy vehicles, users have increasingly strong demands for energy replenishment services. Taking pure electric vehicles as an example, compared with a charging method, a battery swap method may usually complete energy replenishment within a very short period of time, greatly improving the efficiency of energy replenishment, and thus becomes one of key development directions for energy replenishment in China. A battery swap process is performed in a battery charging and swap station. First, a vehicle with a battery to be swapped is parked on a battery swap platform of the battery charging and swap station. Then, a battery swap robot removes a used battery from the vehicle with a battery to be swapped. Finally, the battery swap robot mounts a fully charged battery on the vehicle with a battery to be swapped.

At present, there are mainly two forms of battery swap parking: automatic battery swap parking and manual battery swap parking. Generally, in order to enhance the battery swap experience, the automatic battery swap parking is mostly used. However, in practical applications, during a process of activating the automatic battery swap parking, a failure may occur in an automatic parking system of the vehicle. As a result, the automatic battery swap parking cannot operate properly. In this case, the parking procedure is required to be switched from the automatic battery swap parking to the manual battery swap parking, that is, a driver manually parking the vehicle into a battery swap station. However, due to uneven driving skills of drivers, there is likely a risk in a manual parking process that a vehicle speed cannot be well controlled, leading to a collision with an infrastructure of the battery charging and swap station.

Accordingly, there is a need for a new technical solution in the art to solve the problem described above.

### Summary

To solve the at least one problem in the prior art, namely, that is, the problem in manual battery swap parking that a vehicle speed cannot be well controlled, leading to a collision with an infrastructure of a battery charging and swap station, the disclosure provides a battery swap parking control method. The control method includes:
obtaining a current position of a vehicle when the vehicle is in a reverse gear;
determining a parking speed limit threshold based on the current position;
determining, based on the parking speed limit threshold, a torque limit value for each speed of the vehicle that is less than or equal to the parking speed limit threshold; and
controlling a driving torque of the vehicle at each speed based on the torque limit value.

According to the control method of the disclosure, the current position of the vehicle in a parking process is obtained, the torque limit value of the vehicle at each speed is determined based on the parking speed limit threshold corresponding to the current position, and then, the driving torque of the vehicle at each speed is controlled based on the torque limit value. In this way, a parking speed of the vehicle can be controlled in the parking process based on the position of the vehicle, thereby preventing an accident caused by a collision of the vehicle with the infrastructure of the battery swap station due to an unintended operation of a driver, and improving the safety of the manual battery swap parking process. Furthermore, different positions of the vehicle result in different parking speed limit thresholds, and accordingly, different torque limit values, so that both of the safety and the efficiency of the parking process can be considered.

In a preferred technical solution of the battery swap parking control method, the step of "determining a parking speed limit threshold based on the current position" further includes:
if the current position of the vehicle is outside a battery charging and swap station, determining the parking speed limit threshold to be a first threshold; or
if the current position of the vehicle is within a battery charging and swap station, and positioning wheels of the vehicle are located near positioning grooves, determining the parking speed limit threshold to be a second threshold; or
if the current position of the vehicle is within a battery charging and swap station, and positioning wheels of the vehicle are embedded in positioning grooves, determining the parking speed limit threshold to be a third threshold,
where the first threshold, the second threshold, and the third threshold decrease in sequence.

Different parking speed limit thresholds are determined based on different positions, so that more efficient parking can be achieved.

In a preferred technical solution of the battery swap parking control method, the step of "determining, based on the parking speed limit threshold, a torque limit value for each speed of the vehicle that is less than or equal to the parking speed limit threshold" further includes:
determining the torque limit value based on a correspondence between each speed point below the parking speed limit threshold and a torque limit value.

In a preferred technical solution of the battery swap parking control method, the step of "controlling a driving torque of the vehicle at each speed based on the torque limit value" further includes:
if a current speed of the vehicle is less than the parking speed limit threshold, determining a torque request value based on the current speed, and an opening degree of an accelerator pedal of the vehicle; and
controlling a driving torque of the vehicle at the current speed based on a smaller value of a torque limit value at the current speed and the torque request value.

The driving torque of the vehicle is controlled based on the smaller value of the torque limit value at the current speed and the torque request value, so that the parking speed can be effectively limited while ensuring the smoothness of the parking process of the vehicle.

In a preferred technical solution of the battery swap parking control method, the step of "determining a torque request value based on the current speed, and an opening degree of an accelerator pedal of the vehicle" further includes:
determining the torque request value based on a correspondence between the current speed, the opening degree of the accelerator pedal of the vehicle, and the torque request value.

In a preferred technical solution of the battery swap parking control method, the step of "controlling a driving torque of the vehicle at each speed based on the torque limit value" further includes:
if a current speed of the vehicle is equal to the parking speed limit threshold, controlling the driving torque of the vehicle based on a torque limit value corresponding to the parking speed limit threshold.

The driving torque of the vehicle is controlled based on the torque limit value corresponding to the parking speed limit threshold if the current speed is equal to the parking speed limit threshold, thereby effectively avoiding the collision with an infrastructure of the battery charging and swap station due to an excessively fast parking speed of the vehicle, and improving the safety of the parking process.

In a preferred technical solution of the battery swap parking control method, the control method further includes:
obtaining an opening degree of a brake pedal of the vehicle; and
controlling the driving torque of the vehicle based on the opening degree of the brake pedal, and controlling the driving torque of the vehicle to be zero when the opening degree of the brake pedal is greater than a preset opening degree.

The control method can ensure smooth braking of the vehicle.

In a second aspect of the disclosure, a computer-readable storage medium storing a plurality of program codes is further provided. The program codes are adapted to be loaded and run by a processor to perform the battery swap parking control method described in any item of the first aspect.

In a third aspect of the disclosure, a control apparatus is further provided. The control apparatus includes:
a processor; and
a memory adapted to store a plurality of program codes, where the program codes are adapted to be loaded and run by the processor to perform the battery swap parking control method described in any item of the first aspect.

In a fourth aspect of the disclosure, a vehicle is further provided. The vehicle includes the control apparatus described in the third aspect.

The above control apparatus is provided in the vehicle of the disclosure, so that a parking speed of the vehicle can be controlled in a parking process based on a position of the vehicle, thereby preventing an accident caused by a collision of the vehicle with an infrastructure of a battery swap station due to an unintended operation of a driver, and improving the safety of the manual battery swap parking process.

### Brief Description of the Drawings

The disclosure will be described below with reference to the accompanying drawings. In the drawings:
FIG. 1 is a flowchart of a battery swap parking control method according to the disclosure; and
FIG. 2 is a logical diagram of a possible implementation of a battery swap parking control method according to the disclosure.

### Detailed Description of Embodiments

Preferred implementations of the disclosure are described below with reference to the accompanying drawings. Those skilled in the art should understand that these implementations are only used to explain the technical principles of the disclosure, and are not intended to limit the scope of protection of the disclosure. It should be noted that although the detailed steps of the method of the disclosure are described in detail below, those skilled in the art can combine, split, and change the order of the following steps without departing from the basic principles of the disclosure. The technical solution modified in such a way does not change the basic idea of the disclosure, and therefore also falls within the scope of protection of the disclosure.

It should further be noted that the terms "first", "second", and "third" are merely used for description, but cannot be understood as indicating or implying the relative importance. In addition, in the description of the disclosure, "a plurality of' refers to two or more.

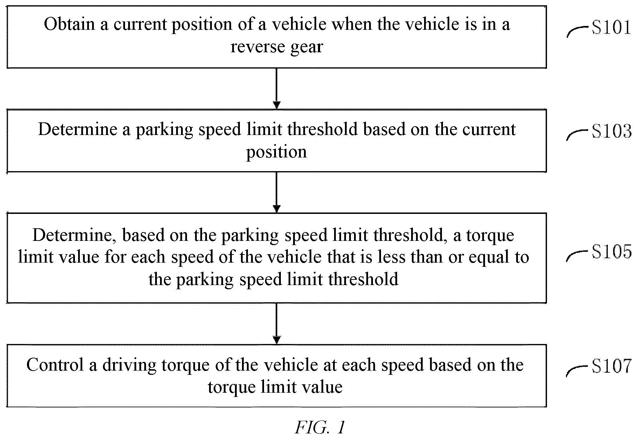

First, with reference to FIG. 1, a battery swap parking control method of the disclosure is described.

As shown in FIG. 1, to solve the problem in manual battery swap parking that a vehicle speed cannot be well controlled, leading to a collision with an infrastructure of a battery charging and swap station, the disclosure provides a battery swap parking control method. The control method includes the following steps.

In S101, a current position of a vehicle is obtained when the vehicle is in a reverse gear. For example, in a battery swap parking process, when a driver needs to manually park a vehicle into a battery swap station, or when an automatic parking function fails during an activation process, a display box may pop up on a center console display of the vehicle to indicate that an interface for manual parking is entered. The interface includes a soft switching button of "enter manual parking". When the driver clicks on the soft switching button of "enter manual parking", a center console display controller (CDC) of the vehicle may send a signal indicating that the vehicle enters a manual parking state. After the center console display controller sends the signal indicating that the vehicle enters a manual parking state, the center console display may display a relative position of the vehicle with respect to the battery swap station, obstacle information, etc., to guide the driver to park the vehicle into the battery swap station; in addition, a vehicle control unit (VCU) may obtain a current position of the vehicle when receiving the signal indicating that the vehicle enters the manual parking state, and enable a manual parking control function when obtaining information that the vehicle is in a rear gear. The current position of the vehicle may be determined and sent by the battery charging and swap station, or may be determined by the vehicle itself. For example, sensors (including, but not limited to, a distance sensor, an infrared sensor, a laser sensor, a camera, etc.) configured to sense the position of the vehicle are arranged at different positions within the battery charging and swap station, and signals are sent out by the sensors for use in identifying the current position of the vehicle. For another example, alternatively, related sensors (as mentioned above) or an identification apparatus (e.g. a radar) may be arranged on the vehicle, to determine the current position of the vehicle through signals or radar imaging in the parking process of the vehicle.

In S103, a parking speed limit threshold is determined based on the current position. For example, different current positions result in different parking speed limit thresholds, which should generally satisfy a relationship that as the position of the vehicle is closer to a battery swap position, the parking speed limit threshold is smaller.

In S105, a torque limit value for each speed of the vehicle that is less than or equal to the parking speed limit threshold is determined based on the parking speed limit threshold. For example, different positions of the vehicle result in different parking speed limit thresholds, that is, different highest speeds that the vehicle can reach, and thus different torques that are required to reach and keep at the highest speeds. In the disclosure, the torque limit value for each speed may be determined based on a correspondence between the speed that is less than or equal to the parking speed limit threshold and the torque limit value, a fitting formula, an empirical value, etc.

In S107, a driving torque of the vehicle at each speed is controlled based on the torque limit value. For example, after the torque limit value for each speed is determined, in the parking process of the vehicle, the driving torque of the vehicle is controlled based on a torque limit value corresponding to a parking speed of the vehicle. For example, when the vehicle is parked at different speeds, a maximum driving torque of the vehicle is limited based on a torque limit value at each of the speeds, so that the driving torque of the vehicle is controlled at or below the torque limit value in each case.

According to the control method of the disclosure, the current position of the vehicle in a parking process is obtained, the torque limit value of the vehicle at each speed is determined based on the parking speed limit threshold corresponding to the current position, and then, the driving torque of the vehicle at each speed is controlled based on the torque limit value. In this way, the parking speed of the vehicle can be controlled in the parking process based on the position of the vehicle, thereby preventing an accident caused by a collision of the vehicle with the infrastructure of the battery swap station due to an unintended operation of a driver, and improving the safety of the manual battery swap parking process. Furthermore, different positions of the vehicle result in different parking speed limit thresholds, and accordingly, different torque limit values, so that both of the safety and the efficiency of the parking process can be considered.

Preferred implementations of the disclosure are described below.

In an implementation, the step in which "a parking speed limit threshold is determined based on the current position" further includes: if the current position of the vehicle is outside a battery charging and swap station, determining the parking speed limit threshold to be a first threshold; or if the current position of the vehicle is within a battery charging and swap station, and positioning wheels of the vehicle are located near positioning grooves, determining the parking speed limit threshold to be a second threshold; or if the current position of the vehicle is within a battery charging and swap station, and positioning wheels of the vehicle are embedded in positioning grooves, determining the parking speed limit threshold to be a third threshold, where the first threshold, the second threshold, and the third threshold decrease in sequence.

An example in which the battery charging and swap station determines and sends the current position of the vehicle is taken. When the vehicle switches to the reverse gear and is located outside the battery charging and swap station, no sensor sends a signal. In this case, the battery charging and swap station periodically sends a vehicle position signal of "position unknown". The vehicle receives this signal through communication with the battery charging and swap station, and determines the parking speed limit threshold to be the first threshold. For example, the first threshold is 6 km/h.

When parking of the vehicle continues and the vehicle enters a battery swap platform of the battery charging and swap station, a position sensor of the battery charging and swap station detects that front wheels of the vehicle are located near V-shaped grooves (which are used to position the front wheels in a lengthwise direction of a vehicle body) of the battery swap platform, and the battery charging and swap station periodically sends a vehicle position signal of "position rearward" or "position reward". After receiving this signal, the vehicle determines the parking speed limit threshold to be the second threshold. For example, the second threshold is 4 km/h.

When parking of the vehicle continues until the front wheels are placed in the V-shaped grooves of the battery swap platform, the position sensor of the battery charging and swap station detects that the front wheels of the vehicle are located in the V-shaped grooves, and the battery charging and swap station periodically sends a vehicle position signal of "position OK". After receiving this signal, the vehicle determines the parking speed limit threshold to be the third threshold. For example, the third threshold is 0 km/h.

In this way, different parking speed limit thresholds are determined based on different positions, so that more efficient parking can be achieved.

Certainly, the above implementations are merely preferred implementations and can be adjusted by those skilled in the art based on specific application scenarios. For example, the current position of the vehicle may alternatively be obtained through a sensor or an identification apparatus arranged on the vehicle body. For another example, the number and positions of position detecting points during the parking process of the vehicle are not fixed, and can be adjusted by those skilled in the art, e.g., the number of the detecting points may be increased or decreased, or the positions of the detecting points may be changed, etc., as long as the detecting points can effectively reflect different positions in the parking process. For example, when the V-shaped grooves for positioning in the lengthwise direction of the vehicle body are provided in rear-wheel positions, the sensors may be correspondingly arranged on sides of the V-shaped grooves of rear wheels. For another example, specific values of the first threshold, second threshold, and third threshold mentioned above are merely exemplary, and can be adjusted by those skilled in the art, and this adjustment does not deviate from the principle of the disclosure. For still another example, the form of the vehicle position signal specifically sent by the battery charging and swap station is not unique, and that in the above implementation is merely an example. Those skilled in the art can adjust the form based on specific scenarios.

In an implementation, the step in which "a torque limit value for each speed of the vehicle that is less than or equal to the parking speed limit threshold is determined based on the parking speed limit threshold" further includes: determining the torque limit value based on a correspondence between each speed point below the parking speed limit threshold and a torque limit value.

For example, the parking speed limit threshold being 6 km/h is taken as an example. Table 1 shows a comparison relationship table of various speed points below the parking speed limit threshold and torque limit values. The speeds and the torque limits in this table are obtained through calibration in advance. As shown in Table 1, this comparison relationship table shows comparison relationships between six different speed points and corresponding torque limit values. Thus, after the parking speed limit threshold is determined to be 6 km/h, torque limit values at different speeds may be determined according to Table 1. For example, when a speed of the vehicle is zero, a driving apparatus of the vehicle is controlled to operate with a torque of 800 N•M to make the vehicle move; when the speed of the vehicle reaches 2 km/h, the driving apparatus of the vehicle is controlled to operate with a torque of 600 N•M, so that the speed continues to smoothly increase and the vehicle has a climbing ability, ..., and so on, when the speed of the vehicle reaches 5 km/h, the driving apparatus of the vehicle is controlled to operate with a torque of 50 N•M, so that the vehicle can be smoothly accelerated to 6 km/h; and when the speed of the vehicle reaches 6 km/h, the driving apparatus of the vehicle is controlled to operate with a torque of 40 N•M, which torque can maintain the speed of the vehicle at 6 km/h.

**Table 1 Comparison table of speed and torque limit value**

| | | | | | | |
|---|---|---|---|---|---|---|
| Speed (km/h) | 0 | 2 | 3 | 4 | 5 | 6 |
| Torque (N•M) | 800 | 600 | 400 | 200 | 50 | 40 |

Certainly, the above implementations are merely preferred implementations and can be adjusted by those skilled in the art based on specific application scenarios. For example, the speed points may be further subdivided or reduced. For another example, the torque limit value corresponding to each speed point is not fixed, and can be adjusted by those skilled in the art based on a calibration result. For still another example, determining the torque limit value based on the correspondence between each speed point below the parking speed limit threshold and the torque limit value is merely a preferred implementation, and those skilled in the art can further determine the torque limit value based on a fitting formula for the correspondence between each speed point below the parking speed limit threshold and the torque limit value, an empirical value, etc.

In addition, the correspondence between each speed point below the parking speed limit threshold and the torque limit value is similar to the above correspondence, and will not be described in the disclosure again. Certainly, when the parking speed limit threshold is 0, the torque limit value is also 0.

In an implementation, the step in which "a driving torque of the vehicle at each speed is controlled based on the torque limit value" further includes: if a current speed of the vehicle is less than the parking speed limit threshold, determining a torque request value based on the current speed, and an opening degree of an accelerator pedal of the vehicle, and controlling a driving torque of the vehicle at the current speed based on a smaller value of a torque limit value at the current speed and the torque request value; or if a current speed of the vehicle is equal to the parking speed limit threshold, controlling the driving torque of the vehicle based on a torque limit value corresponding to the parking speed limit threshold.

For example, during the manual parking process, there may be two situations due to the existence of the parking speed limit threshold, namely, a situation in which the vehicle speed is less than the parking speed limit threshold, and a situation in which the vehicle speed is equal to the parking speed limit threshold. In the former situation, when the driver steps on the accelerator pedal, the vehicle control unit may receive the torque request. If the driver steps on the accelerator pedal with a small opening degree, the corresponding torque request value is also small at the same speed; on the contrary, if the driver steps on the accelerator pedal with a large opening degree, the corresponding torque request value is also large, even larger than the torque limit value at this speed. In this case, if the driving torque is not limited, problems such as jerking movement of the vehicle, and a collision with the infrastructure are likely to occur. Therefore, when the current speed of the vehicle is less than the parking speed limit threshold, the torque request value is first determined based on the current speed and the opening degree of the accelerator pedal. Then, a determination is made based on the torque request value and the torque limit value at the current speed. If the torque request value is less than the torque limit value, this torque is considered to be a safe torque, and the driving torque of the vehicle may be controlled based on the torque. Otherwise, if the torque request value is greater than the torque limit value, there may be a safety hazard, and thus, the driving torque of the vehicle is controlled based on the torque limit.

In the latter situation, if the current speed is equal to the parking speed limit threshold of the current position, the driving torque of the vehicle is controlled based on the torque limit value corresponding to the parking speed limit threshold, so that the speed of the vehicle is maintained at the parking speed limit threshold.

The driving torque of the vehicle is controlled based on the smaller value of the torque limit value at the current speed and the torque request value, so that the parking speed can be effectively limited while ensuring the smoothness of the parking process of the vehicle. The driving torque of the vehicle is controlled based on the torque limit value corresponding to the parking speed limit threshold if the current speed is equal to the parking speed limit threshold, thereby effectively avoiding the collision with an infrastructure of the battery charging and swap station due to an excessively fast parking speed of the vehicle, and improving the safety of the parking process.

Certainly, the control method is merely a preferred method and can be adjusted by those skilled in the art without departing from the principle of the disclosure. For example, the driving torque may be alternatively controlled based on a ratio of the opening degree of the accelerator pedal to a total opening degree. For example, when the opening degree of the accelerator pedal is 50% of the total opening degree, the driving torque is controlled based on 50% of the torque limit value. For another example, regardless of the opening degree with which the driver steps on the accelerator pedal, the driving torque may be directly controlled based on the torque limit value at this speed.

In an implementation, the step of "determining a torque request value based on the current speed, and an opening degree of an accelerator pedal of the vehicle" further includes: determining the torque request value based on a correspondence between the current speed, the opening degree of the accelerator pedal of the vehicle, and the torque request value.

For example, the torque request value may be determined based on a comparison relationship table of the current speed, the opening degree of the accelerator pedal of the vehicle, and the torque request value. The comparison relationship table may be calibrated based on a test. The specific calibration method is a conventional means in the art, and will not be described in the disclosure again.

Certainly, the method for determining the torque request value is not fixed. In other implementations, the torque request value may alternatively be determined based on a fitting formula for a correspondence among the three parameters, an empirical value, etc.

In an implementation, the control method further includes: obtaining an opening degree of a brake pedal of the vehicle; and controlling the driving torque of the vehicle based on the opening degree of the brake pedal, and controlling the driving torque of the vehicle to be zero after the opening degree of the brake pedal is greater than a preset opening degree.

For example, when the vehicle is near the V-shaped grooves during parking, the driver gradually steps on the brake pedal and the vehicle speed gradually decreases until the front wheels of the vehicle are located in the V-shaped grooves, in which case the opening degree with which the driver steps on the brake pedal reaches a maximum. In this process, the driving torque of the vehicle is controlled based on the opening degree of the brake pedal, so that as the opening degree of the brake pedal is larger, the driving torque is smaller, and finally, when the opening degree of the brake pedal is greater than a particular opening degree, the driving torque is zero, in which case, the vehicle is completely braked. The correspondence between the specific opening degree of the above brake pedal and the driving torque may be determined based on a comparison table, or may be based on a fitting formula or an empirical value. In this way, smooth braking of the vehicle can be ensured.

Certainly, the above implementations are merely preferred implementations. Those skilled in the art can choose whether to set the above steps based on specific application scenarios. Certainly, the above steps can be omitted, and the driving torque is limited based on the current position of the vehicle.

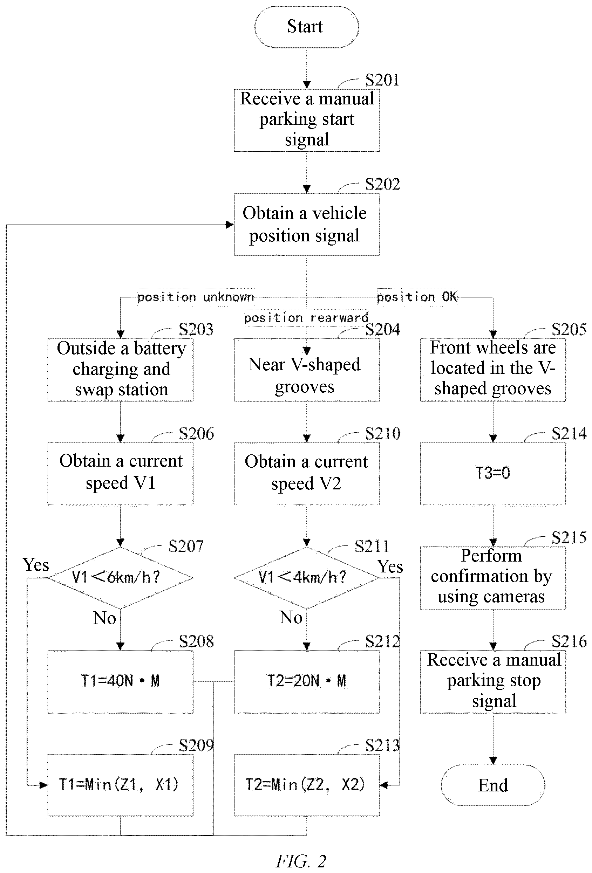

A possible implementation process of the disclosure will be described below with reference to FIG. 2. As shown in FIG. 2, in the possible implementation, after a driver drives a vehicle with a battery to be swapped to a battery charging and swap station and enables an automatic parking function, if the automatic parking function fails during an activation process, a display box may pop up on a center console display of the vehicle to indicate to the driver that an interface for manual parking is entered. The interface includes a soft switching button of "enter manual parking". When the driver clicks on the soft switching button of "enter manual parking", a center console display controller (CDC) of the vehicle may send a manual parking start signal.

In S201, after the center console display controller (CDC) of the vehicle sends out the manual parking start signal, the center console display may display a relative position of the vehicle with respective to the battery swap station, and obstacle information, which are acquired by the battery swap station, to guide the driver to park the vehicle into the battery swap station; in addition, the vehicle control unit (VCU) receives the manual parking start signal, and S202 is then executed.

In S202, a vehicle position signal is obtained when the vehicle switches to a rear gear. If the obtained vehicle position signal is "position unknown", S203 is executed. If the received vehicle position signal is "position rearward", S204 is executed. If the received vehicle position signal is "position OK", S205 is executed.

In S203, if it is determined that the vehicle is located outside the battery charging and swap station, a parking speed limit threshold is determined to be 6 km/h, and S206 is then executed.

In S204, if it is determined that front wheels of the vehicle are located near V-shaped grooves, the parking speed limit threshold is determined to be 4 km/h, and S210 is then executed.

In S205, if it is determined that the front wheels of the vehicle are located in the V-shaped grooves, the parking speed limit threshold is determined to be 0, and S215 is then executed.

In S206, a current speed V1 is obtained, and S207 is then executed.

In S207, it is determined whether V1 < 6 km/h is true. If it is true, S209 is executed; otherwise, S208 is executed.

In S208, a driving torque of the vehicle is controlled to be 40 N•M, and then, the method returns to execute S202 is.

In S209, a torque demand value X1 is obtained based on a comparison relationship table of an opening degree value of an accelerator pedal, the current speed value, and a torque demand value, a torque limit value Z1 is obtained based on a first comparison relationship table of the current speed and a torque limit value, and the driving torque of the vehicle is controlled based on a smaller value of the torque demand value and the torque limit value. Then, the method returns to execute S202.

In S210, a current speed V2 is obtained, and S211 is then executed.

In S211, it is determined whether V2 < 4 km/h is true. If it is true, S213 is executed; otherwise, S212 is executed.

In S212, a driving torque of the vehicle is controlled to be 20 N•M, and then, the method returns to execute S202 is.

In S213, a torque demand value X2 is obtained based on the comparison relationship table of the opening degree value of the accelerator pedal, the current speed value, and the torque demand value, a torque limit value Z2 is obtained based on a second comparison relationship table of the current speed and the torque limit value, and the driving torque of the vehicle is controlled based on a smaller value of the torque demand value and the torque limit value. Then, the method returns to execute S202.

In S214, an opening degree of a brake pedal is obtained, and the driving torque of the vehicle is controlled based on the opening degree of the brake pedal to gradually decrease to 0. Then, S215 is executed.

In S215, completion of front wheel positioning is confirmed by using a camera on one side of each of the V-shaped grooves, and S216 is then executed.

In S216, the center console display controller (CDC) of the vehicle sends a manual parking stop signal, and the vehicle control unit (VCU) receives the manual parking stop signal and exits a speed limit function.

Moreover, in the manual parking process, if the driver switches into a forward gear, the vehicle control unit (VCU) does not limit the torque and responds to a torque request of the driver normally.

It should be noted that although the steps are described in order in the above embodiments, those skilled in the art may understand that in order to achieve the effects of the embodiments, different steps are not necessarily performed in the order, but may be performed simultaneously (in parallel) or in reverse order, and these simple variations all fall within the scope of protection of the disclosure.

Those skilled in the art can understand that all or some of the procedures in the method of the above embodiments of the disclosure may also be implemented by a computer program instructing relevant hardware. The computer program may be stored in a computer-readable storage medium, and when the computer program is executed by a processor, the steps of the above method embodiments can be implemented. The computer program includes computer program code. The computer program code may be in a source code form, an object code form, an executable file form, some intermediate forms, or the like. The computer-readable medium can include: any entity or apparatus that can carry the computer program code, such as a medium, a USB flash drive, a removable hard disk, a magnetic disk, an optical disc, a computer memory, a read-only memory, a random access memory, an electrical carrier signal, a telecommunications signal, and a software distribution medium. It should be noted that contents contained in the computer-readable medium can be appropriately added or reduced according to the requirements of legislation and patent practice in the jurisdiction. For example, in some jurisdictions, according to the legislation and patent practice, the computer-readable medium does not include electric carrier signals and telecommunication signals.

Various embodiments regarding components in the disclosure may be implemented in hardware, or implemented by software modules running on one or more processors, or implemented in combinations thereof. Those skilled in the art should understand that a microprocessor or a digital signal processor (DSP) may be used in practice to implement some or all of the functions of some or all of the components in the server and client according to the embodiments of the disclosure. The disclosure may alternatively be implemented as devices or apparatus programs (for example, PC programs and PC program products) for performing some or all of the methods as described herein. Such programs for implementing the disclosure may be stored on a PC readable medium, or may be in the form of one or more signals. Such signals may be obtained by downloading from an Internet website, or provided on a carrier signal, or provided in any other form.

The disclosure further provides a computer-readable storage medium. In an embodiment of the computer-readable storage medium according to the disclosure, the computer-readable storage medium may be configured to store a program for implementing the battery swap parking control method in the above method embodiments, and the program may be loaded and run by a processor to implement the above the battery swap parking control method. For ease of description, only parts related to the embodiments of the disclosure are shown. For specific technical details that are not disclosed, refer to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

The disclosure further provides a control apparatus. In an embodiment of the control apparatus according to the disclosure, the control apparatus includes a processor and a memory. The memory may be configured to store a program for implementing the battery swap parking control method in the above method embodiments, and the processor may be configured to execute the program in the memory. The program includes, but is not limited to, the program for implementing the battery swap parking control method in the above method embodiments. For ease of description, only parts related to the embodiments of the disclosure are shown. For specific technical details that are not disclosed, refer to the method part of the embodiments of the disclosure. The computer device may be an apparatus device formed by various electronic devices.

A vehicle is further provided. The vehicle includes the above control apparatus.

The provision of the control apparatus in the vehicle allows a parking speed of the vehicle to be controlled in a manual battery swap parking process, thereby avoiding damage to an infrastructure of a battery charging and swap station because of an excessively fast speed, and improving the safety of the manual battery swap parking process.

Those skilled in the art can understand that although some embodiments described herein include some but not other features included in other embodiments, combinations of features of different embodiments are meant to be within the scope of the disclosure and form different embodiments. For example, in the claims of the disclosure, any one of the claimed embodiments can be used in any combination.

Heretofore, the technical solutions of the disclosure have been described in combination with the preferred implementations shown in accompanying drawings. However, those skilled in the art can readily understand that the scope of protection of the disclosure is apparently not limited to these particular implementations. Those skilled in the art can make equivalent changes or substitutions to the related technical features without departing from the principle of the disclosure, and all the technical solutions with such changes or substitutions shall fall within the scope of protection of the disclosure.

## Claims

1. A battery swap parking control method, **characterized by** comprising:
obtaining a current position of a vehicle when the vehicle is in a reverse gear;
determining a parking speed limit threshold based on the current position;
determining, based on the parking speed limit threshold, a torque limit value for each speed of the vehicle that is less than or equal to the parking speed limit threshold; and
controlling a driving torque of the vehicle at each speed based on the torque limit value.

2. The battery swap parking control method according to claim 1, **characterized in that** the step of "determining a parking speed limit threshold based on the current position" further comprises:
if the current position of the vehicle is outside a battery charging and swap station, determining the parking speed limit threshold to be a first threshold; or
if the current position of the vehicle is within a battery charging and swap station, and positioning wheels of the vehicle are located near positioning grooves, determining the parking speed limit threshold to be a second threshold; or
if the current position of the vehicle is within a battery charging and swap station, and positioning wheels of the vehicle are embedded in positioning grooves, determining the parking speed limit threshold to be a third threshold,
wherein the first threshold, the second threshold, and the third threshold decrease in sequence.

3. The battery swap parking control method according to claim 1 or 2, **characterized in that** the step of "determining, based on the parking speed limit threshold, a torque limit value for each speed of the vehicle that is less than or equal to the parking speed limit threshold" further comprises:
determining the torque limit value based on a correspondence between each speed point below the parking speed limit threshold and a torque limit value.

4. The battery swap parking control method according to any one of claims 1 to 3, **characterized in that** the step of "controlling a driving torque of the vehicle at each speed based on the torque limit value" further comprises:
if a current speed of the vehicle is less than the parking speed limit threshold, determining a torque request value based on the current speed, and an opening degree of an accelerator pedal of the vehicle; and
controlling a driving torque of the vehicle at the current speed based on a smaller value of a torque limit value at the current speed and the torque request value.

5. The battery swap parking control method according to claim 4, **characterized in that** the step of "determining a torque request value based on the current speed, and an opening degree of an accelerator pedal of the vehicle" further comprises:
determining the torque request value based on a correspondence between the current speed, the opening degree of the accelerator pedal of the vehicle, and the torque request value.

6. The battery swap parking control method according to any one of claims 1 to 5, **characterized in that** the step of "controlling a driving torque of the vehicle at each speed based on the torque limit value" further comprises:
if a current speed of the vehicle is equal to the parking speed limit threshold, controlling the driving torque of the vehicle based on a torque limit value corresponding to the parking speed limit threshold.

7. The battery swap parking control method according to any one of claims 1 to 6, **characterized by** further comprising:
obtaining an opening degree of a brake pedal of the vehicle; and
controlling the driving torque of the vehicle based on the opening degree of the brake pedal, and controlling the driving torque of the vehicle to be zero when the opening degree of the brake pedal is greater than a preset opening degree.

8. A computer-readable storage medium, **characterized by** storing a plurality of program codes, wherein the program codes are adapted to be loaded and run by a processor to perform the battery swap parking control method according to any one of claims 1 to 7.

9. A control apparatus, **characterized by** comprising:
a processor; and
a memory adapted to store a plurality of program codes, wherein the program codes are adapted to be loaded and run by the processor to perform the battery swap parking control method according to any one of claims 1 to 7.

10. A vehicle, **characterized by** comprising the control apparatus according to claim 9.
